# EUROPEAN PATENT APPLICATION

(11) **EP 4 096 231 A1**
(43) Date of publication of application: **30.11.2022**
(21) Application number: 20914934.3
(22) Date of filing: 23.12.2020
(51) Int. Cl.: H04N 21/854, H04N 21/81, H04N 21/222, G06Q 50/10, G06F 16/638, G06F 16/683

(54) **SYSTEM FOR PROVIDING CUSTOMIZED VIDEO PRODUCING SERVICE USING CLOUD-BASED VOICE COMBINING**

(30) Priority: 23.01.2020 KR 20200009345
(71) Applicant: Jang, Hyung Soon, Gyeonggi-do 14976 (KR)
(72) Inventor: Jang, Hyung Soon, Gyeonggi-do 14976 (KR)
(74) Representative: M. Zardi & Co S.A.
(86) International application number: PCT/KR2020/019044
(87) International publication number: WO 2021/149929

(57) **Abstract**

A system for providing a customized video producing service using a cloud based voice combination of the present invention comprises a customized video production service providing server including: a user terminal that is input and uploads utterance of a user by voice data, selects any one category among at least one type of category to select content including an image or a video, selects a subtitle or background music, and plays a customized video including the content, the uploaded voice data, and the subtitle or background music; a database unit classifying and storing text, image, video, and background music by the at least one type of category; an upload unit receiving the voice data corresponding to the utterance of the user uploaded from the user terminal; a conversion unit that converts the uploaded voice data into text data using STT (Speech to Text) and stores the converted text data; a provision unit that provides an image or video previously mapped and stored in the selected category to the user terminal when any one category among the at least one type of category is selected from the user terminal; a creation unit that creates the customized video including the content, the uploaded voice, and the subtitles or background music when receiving subtitle data or selection of background music from the user terminal by the user terminal's selection of the subtitle or background music.

## Description

### FIELD OF THE INVENTION

The present invention relates to a system for providing a customized video producing service using a cloud-based voice combination and provides a platform capable of producing a video by uploading uttered voice data to a cloud and using a recorded file searched by voice.

### BACKGROUND OF THE INVENTION

Recently, with the evolution and rapid spread of Internet technology and the advent of various media production tools, an environment for producing and distributing video directly by ordinary people is rapidly being created. The infrastructure that enables real-time video streaming through the Internet environment and unrestricted access to video anytime, anywhere based on the rapid spread of mobile devices is the main reason behind this environmental change. Accordingly, it is thought that an environment where ordinary users can directly produce and distribute content if they have their own abilities and will is established. However, it is still difficult for ordinary people to create and distribute high quality videos suitable for each purpose despite the development of the infrastructure. Although powerful and diverse editing tools and services are available to create multimedia contents with ease, it still requires a long and patient learning process to use the tools proficiently, and the cost of the tools is not low.

Meanwhile, methods of creating videos using photos have been researched and developed. As a prior art, Korean Patent Application No. 2014-0052167 (published on May 07, 2014) discloses a configuration for generating a video, which comprising steps of: receiving video production request from a production terminal; transmitting a list of background music selectable as background music of a video to the production terminal upon the video production request; receiving background music selection information in response thereto from the production terminal; detecting a sound source of the background music selected by the production terminal from among prestored music files and transmitting the sound source of the selected background music to the production terminal; receiving and storing mapping information that maps a picture that is to be exposed while playing the selected background music, with a play time; and receiving a scenario in which a user determines a method of exposing and a direction of the picture from the video production terminal in order to expose each photo based on the mapping information and creating a video.

However, even if using the configuration described above, supporting the video production by combining a photo and background music is only a basic step in producing a video. In order to insert the user's voice into a video, the user's recording process and matching process are required, and thus, lack of professional knowledge and a burden of additional cost are still high for individuals or small business owners to directly produce media content. In addition, since the recorded file is saved by a file name, the process of creating a video using the recorded file becomes more complicated because it is necessary to check the file name or to directly play and listen to the recorded file to see what kind of recording it is. Accordingly, there is a need for research and development of a platform that can automatically classify and store a voice spoken by a user and search by voice and thus enable the user to easily produce a video using a recorded file.

### DETAILED DESCRITION OF THE INVENTION

### TECHNICAL PROBLEMS

The present invention can provide a method for providing a customized video producing service using a cloud-based voice combination that enables even ordinary people to create a customized video by intuitively matching a subtitle, background music, and a recorded file without purchasing or downloading an editing program, by automatically distinguishing and extracting the recorded file containing a user's utterance among recorded files stored in a user terminal to upload the recorded file to a cloud platform in a background mode and providing content by at least one prestored category when a user produces a customized video in the user terminal, and that can maximize user convenience by automatically transcoding the customized video to fit into a format required by a preset upload server when uploading it to the upload server. However, technical objects to be achieved by the present invention is not limited to the object described above, and other technical objects may exist.

### SUMMARY OF THE INVENTION

As a technical means for achieving the technical problem described above, an embodiment of the present invention enables even ordinary people to create a customized video by intuitively matching a subtitle, background music, and a recorded file without purchasing or downloading an editing program, by automatically distinguishing and extracting the recorded file containing a user's utterance among recorded files stored in a user terminal to upload the recorded file to a cloud platform in a background mode and providing content by at least one prestored category when a user produces a customized video in the user terminal, and can maximize user convenience by automatically transcoding the customized video to fit into a format required by a preset upload server when uploading it to the upload server.

### TECHNICAL EFFECTS OF THE INVENTION

According to any one of the means for solving the problems of the present invention, a method for providing a customized video producing service using a cloud-based voice combination enables even ordinary people to create a customized video by intuitively matching a subtitle, background music, and a recorded file without purchasing or downloading an editing program, by automatically distinguishing and extracting the recorded file containing a user's utterance among recorded files stored in a user terminal to upload the recorded file to a cloud platform in a background mode and providing content by at least one prestored category when a user produces a customized video in the user terminal, and can maximize user convenience by automatically transcoding the customized video to fit into a format required by a preset upload server when uploading it to the upload server.

### BRIEF DESCRIPTION OF THE DRAWINGS

FIG. 1 is a diagram for explaining a system for providing a customized video producing service using a cloud-based voice combination according to an embodiment of the present invention.
FIG. 2 is a block diagram illustrating a customized video production service providing server included in the system of FIG. 1.
FIGs. 3 and 4 are diagrams for explaining an embodiment in which a customized video production service using a cloud-based voice combination is embodied according to an embodiment of the present invention.
FIG.5 is an operation flowchart illustrating a method of providing a customized video producing service using a cloud-based voice combination according to an embodiment of the present invention.

### BEST MODES FOR THE INVENTION

A system for providing a customized video producing service using a cloud-based voice combination, comprising: a customized video production service providing server including: a user terminal that is input and uploads utterance of a user by voice data, selects any one category among at least one type of category to select content including an image or a video, selects a subtitle or background music, and plays a customized video including the content, the uploaded voice data, and the subtitle or background music; a database unit classifying and storing text, image, video, and background music by the at least one type of category; an upload unit receiving the voice data corresponding to the utterance of the user uploaded from the user terminal; a conversion unit that converts the uploaded voice data into text data using STT (Speech to Text) and stores the converted text data; a provision unit that provides an image or video previously mapped and stored in the selected category to the user terminal when any one category among the at least one type of category is selected from the user terminal; a creation unit that creates the customized video including the content, the uploaded voice, and the subtitles or background music when receiving subtitle data or selection of background music from the user terminal by the user terminal's selection of the subtitle or background music.

### MODES FOR THE INVENTION

Hereinafter, embodiments of the present invention will be described in detail with reference to the accompanying drawings so that those of ordinary skill in the art can easily implement them. However, the present invention may be embodied in several different forms and is not limited to the embodiments described herein. In addition, in order to explain the present invention in the drawings clearly, parts irrelevant to the description of the present invention are omitted. Like reference numbers are used to refer to similar parts throughout the specification.

Throughout the specification, when a part is "connected" with another part, this includes not only a case of being "directly connected" but also a case of being "electrically connected" with another part interposed therebetween. Furthermore, when a part "includes" a component, it means that other component may be further included rather than excluding other component unless otherwise stated, and thus, it should be understood that existence or addition of one or more other features, numbers, steps, operations, components, parts, or combinations thereof is not precluded.

The terms "about", "substantially", and the like to describe a degree or an extent throughout the specification are used in a sense at or close to a numerical value when manufacturing and material tolerances are presented in the specification and are intended to enhance the understanding of the present invention and to prevent a precise or absolute figure of the present disclosure from being unfairly used by unscrupulous infringers. The term "step (doing)" or "step of (doing)" does not mean "step for (doing)."

In this specification, "unit" includes a unit embodied by hardware, a unit embodied by software, and a unit embodied by using both. In addition, one unit may be embodied by using two or more hardware, and two or more units may be embodied by one hardware.

In this specification, some of operations or functions described as being performed by a terminal, an apparatus, or a device may be instead performed by a server connected to the terminal, the apparatus, or the device. Similarly, some of the operations or functions described as being performed by the server may be instead performed in the terminal, the apparatus, or the device connected to the server.

In this specification, some of operations or functions described as mapping or matching may be construed as mapping or matching a terminal's unique number, which is an identification data of the terminal, or personal identification information.

Hereinafter, the present invention will be described in detail with reference to the accompanying drawings.

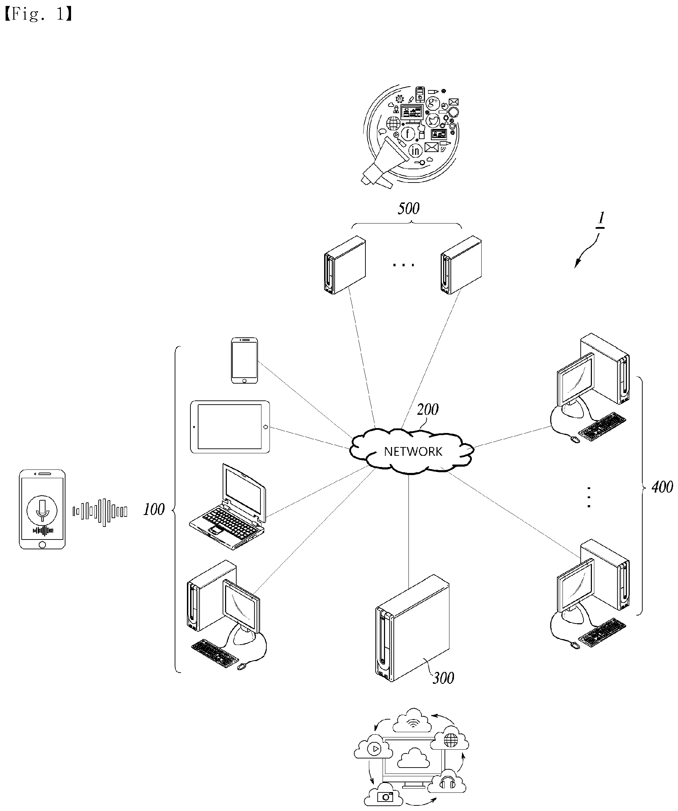

FIG. 1 is a diagram for explaining a system for providing a customized video producing service using a cloud-based voice combination according to an embodiment of the present invention. Referring to FIG. 1, the system 1 may comprise at least one user terminal 100, a customized video production service providing server 300, at least one content providing terminal 400, and at least one upload server 500. However, since the system 1 for providing a customized video producing service using the cloud-based voice combination of FIG. 1 is only an embodiment of the present invention, the present invention is not construed to be limited to configurations of FIG. 1.

In this embodiment, each component of FIG. 1 is generally connected through a network 200. For example, as shown in FIG. 1, at least one user terminal 100 may be connected to a customized video production service providing server 300 through the network 200. In addition, the customized video production service providing server 300 may be connected to at least one user terminal 100, at least one content providing terminal 400, and at least one upload server 500 through the network 200. Furthermore, the at least one content providing terminal 400 may be connected to the customized video production service providing server 300 through the network 200. In addition, the at least one upload server 500 may be connected to the at least one user terminal 100, the customized video production service providing server 300, and the at least one content providing terminal 400 through the network 200.

The network 200 refers to a connection structure in which information can be exchanged between each node such as a plurality of terminals and servers. Examples of such networks include RF, 3rd Generation Partnership Project (3GPP) network, Long Term (LTE). Evolution) network, 5th Generation Partnership Project (5GPP) network, World Interoperability for Microwave Access (WIMAX) network, Internet, Local Area Network (LAN), Wireless Local Area Network (Wireless LAN), Wide Area Network (WAN), Personal Area Network (PAN), Bluetooth network, Near Field Communication (NFC) network, satellite broadcasting network, analog broadcasting network, Digital Multimedia Broadcasting (DMB) network, and the like but are not limited thereto.

In description below, the term "at least one" is defined as a term including the singular and the plural, and even if the term "at least one" does not exist, each element may exist in the singular or the plural and may mean the singular or the plural. In addition, each component may be changed to be provided in singular or plural according to embodiments.

The at least one user terminal 100 may be a terminal that produces a user customized video using a web page, an app page, a program, or an application related to a customized video producing service using a cloud-based voice combination. In this case, the at least one user terminal 100 may be a terminal that records the user's voice utterance and may be a terminal that transmits recorded voice data to the customized video production service providing server 300 in a background mode. In addition, the user terminal 100 may access a page provided by the customized video production service providing server 300. In that page, the user terminal 100 may select at least one category and select background music, a character, an image, a video, and the like, which were pre-mapped to the category and stored. Furthermore, the user terminal 100 may be a terminal that selects voice data uploaded in the background and inserts the selected voice data into a customized video or may be a terminal that inputs subtitle text and transmits the subtitle text to the customized video production service providing server 300. In addition, the user terminal 100 may be a terminal that plays or streams the customized video created by the customized video production service providing server 300 and may be a terminal capable of editing or modifying a video. In this case, the video is multimedia mapped to a preset category and stored in the customized video production service providing server 300, and the customized video is defined as multimedia created by transcoding various types of components selected by the user. In addition, the user terminal 100 may be a terminal that performs payment for storing in the user terminal 100 or uploading the upload server 500.

In this case, the at least one user terminal 100 may be embodied as a computer that can access a remote server or a remote terminal through a network. For example, the computer may include a navigation system, a laptop and a desktop, which are equipped with web browsers. In this case, the at least one user terminal 100 may be embodied as a terminal that can access a remote server or a remote terminal through a network. For example, the at least one user terminal 100 may be a wireless communication device that ensures portability and mobility. For example, the wireless communication device that ensures portability and mobility, may include all kinds of handheld based wireless communication devices such as a navigation system, Personal Communication System (PCS), Global System for Mobile communications (GSM), Personal Digital Cellular (PDC), Personal Handy-phone System (PHS), Personal Digital Assistant (PDA), International Mobile Telecommunication-2000 (IMT-2000), Code Division Multiple Access-2000 (CDMA-2000), W-Code Division Multiple Access (W-CDMA), Wireless Broadband Internet (Wibro) terminal, a smart phone, a smart pad, a tablet PC, and the like.

The customized video production service providing server 300 may be a server that provides a customized video production service web page, an app page, a program, or an application using a cloud-based voice combination. In addition, the customized video production service providing server 300 may be a server that collects characters, images, videos, background music, and others from the at least one content providing terminal 400 to build big data. Furthermore, the customized video production service providing server 300 may be a server that tags and classifies data in the big data to correspond to a preset category, maps the data to the preset category, and stores the data. In addition, the customized video production service providing server 300 may be a server that identifies and distinguishes a user among the at least one recorded data stored in the user terminal 100, extracts a user's voice data, and receives the user's voice data in a background mode. In addition, when the user terminal 100 produces the customized video, the customized video production service providing server 300 receives a selection of the at least one category and transmits data pre-mapped to the selected category to the user terminal 100 to let the user terminal 100 select the data. In this case, when the user terminal 100 searches for voice data, the customized video production service providing server 300 may be a server that sorts the voice data corresponding to a search word based on similarity and transmits the sorted list to the user terminal 100. In addition, when a creation of a customized video is requested after all selections are made in the user terminal 100, the customized video production service providing server 300 may be a server that creates the customized video and then streams the customized video to the user terminal 100. Furthermore, when the user terminal 100 performs a payment, the customized video production service providing server 300 identifies a required format of the user terminal 100 or the at least one upload server 500, then transcodes the customized video according to the identified format and transmits or uploads the transcoded customized video.

In this case, the customized video production service providing server 300 may be embodied as a computer that can access a remote server or a remote terminal through a network. For example, the computer may include a navigation system, a laptop and a desktop, which are equipped with web browsers.

The at least one content providing terminal 400 may be a terminal of a copyright holder, an employee, an agency, a sport or entertainment agency, or others, which use a web page, an app page, a program, or an application related to the customized video production service using a cloud-based voice combination. In this case, the at least one content providing terminal 400 is a terminal of an employee who receives a payment or performs a payment for a commission based on a copyright contract or a settlement after transmitting an image, a video, a character, background music, and the like to the customized video production service providing server 300. The content providing terminal 400 may be involved in data classification and tagging for supervised learning in an initial big data construction. However, after the learning of the artificial intelligence algorithm for classification is completed, the content providing terminal 400 may switch to unsupervised learning and only check errors without any further intervention.

In this case, the at least one content providing terminal 400 may be embodied as a computer that can access a remote server or a remote terminal through a network. For example, the computer may include a navigation system, a laptop and a desktop, which are equipped with web browsers. In this case, the at least one user terminal 100 may be embodied as a terminal that can access a remote server or a remote terminal through a network. For example, the at least one content providing terminal 400 may be a wireless communication device that ensures portability and mobility. For example, the wireless communication device that ensures portability and mobility, may include all kinds of handheld based wireless communication devices such as a navigation system, Personal Communication System (PCS), Global System for Mobile communications (GSM), Personal Digital Cellular (PDC), Personal Handy-phone System (PHS), Personal Digital Assistant (PDA), International Mobile Telecommunication-2000 (IMT-2000), Code Division Multiple Access-2000 (CDMA-2000), W-Code Division Multiple Access (W-CDMA), Wireless Broadband Internet (Wibro) terminal, a smart phone, a smart pad, a tablet PC, and the like.

The at least one upload server 500 may be a server that uploads the customized video that is uploaded from the custom video production service providing server 300 with or without using a web page, an app page, a program, or an application related to the custom video production service related using a cloud-based voice combination. In this case, the at least one upload server 500 may be embodied as a computer that can connect to a remote server or a remote terminal through a network. For example, the computer may include a navigation system, a laptop and a desktop, which are equipped with web browsers.

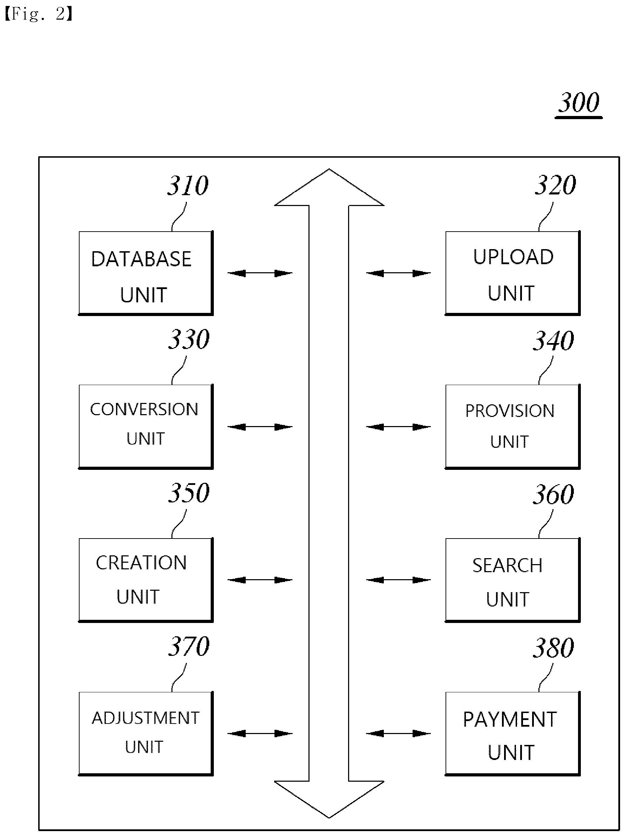

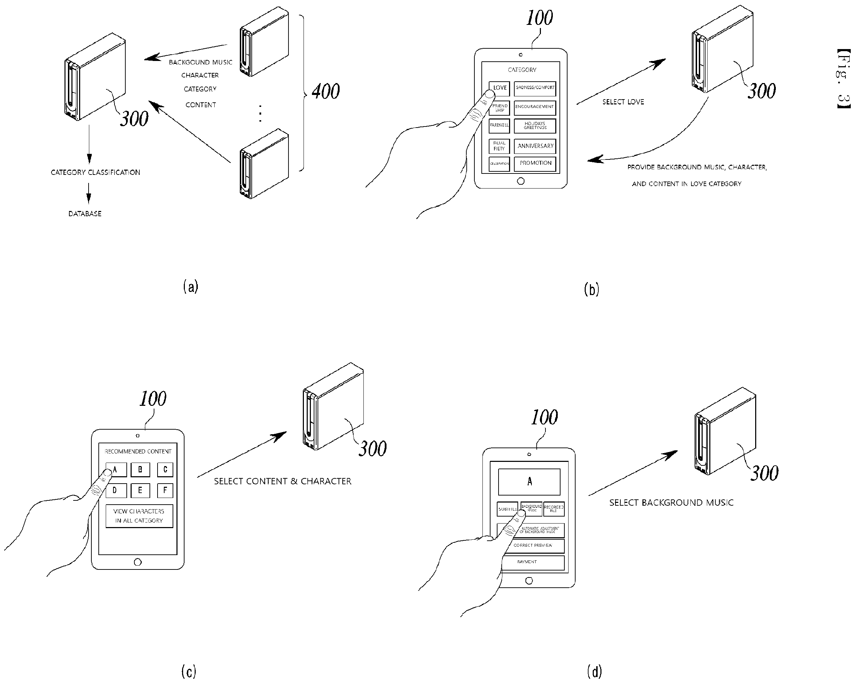

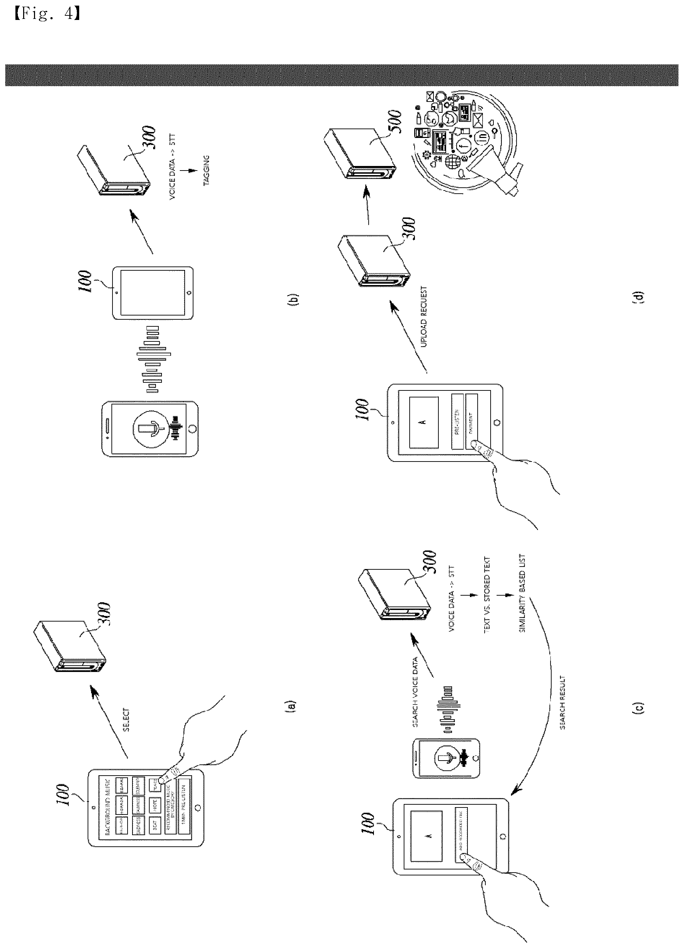

FIG. 2 is a block diagram illustrating a customized video production service providing server included in the system of FIG. 1. FIGs. 3 and 4 are diagrams for explaining an embodiment in which a customized video production service using a cloud-based voice combination is embodied according to an embodiment of the present invention.

Referring to FIG. 2, the customized video production service providing server 300 may include a database unit 310, an upload unit 320, a conversion unit 330, a provision unit 340, a creation unit 350, and a search unit ( 360), an adjustment unit 370, and a payment unit 380.

When the customized video production service providing server 300 or another server (not shown) operating in conjunction with the customized video production service providing server 300 according to an embodiment of the present invention transmits a custom video production service application, program, app page, web page, and others using a cloud-based voice combination, to the at least one user terminal 100, at least one content providing terminal 400, and at least one upload server 500, the at least one user terminal 100, at least one content providing terminal 400, and at least one upload server 500 may install or open the customized video production service application, program, app page, web page, and others using a cloud-based voice combination. In addition, the service program may operate in the at least one user terminal 100, at least one content providing terminal 400, and at least one upload server 500 using a script executed in a web browser. The web browser is a program that enables the use of a web (World Wide Web: WWW) service and refers to a program that receives and displays hypertext written in HTML (Hyper Text Mark-up Language) such as Netscape, Explorer, and Chrome. In addition, the application means an application on the terminal. For example, the application includes an app executed in a mobile terminal such as a smartphone.

Referring to FIG. 2, the database unit 310 may classify and store at least one type of a text, an image, a video, and background music by each category. In this case, the text, image, video, and background music by at least one category may be classified into structured data, semi-structured data, and unstructured data according to a degree of standardization. The structured data is data having a standard that has a fixed type and a fixed format. Thus, the structured data is data of a type in which a value is entered or an item is selected in a fixed format, such as number and date, in a fixed field, or is metadata of various data. The semi-structured data is a data of type in which a text format is mostly used. A field of this data type is not fixed, but content contained in the text can be defined according to characteristics of the data. The unstructured data are items that are difficult to define due to their irregular formats and generally include a text and an image. Since most text data can be analyzed in the semi-structured format, only video or image data can be considered as unstructured data. The unstructured data includes various types of video data and image data. The unstructured data may be also learned as a keyword, a tag, or metadata to be classified and patterned, and then, the data may be processed into a record format and provided along with related data, when new unstructured data classification is requested.

The database unit 310 may distribute raw data in parallel and refine the unstructured data, the structured data, and the semi-structured data included in the stored raw data, perform preprocessing including classification as metadata, and perform analysis including data mining of the preprocessed data. In addition, the database unit 310 may visualize and output the analyzed data. In this case, the data mining may perform classification, which predicts a class of new data by learning a training data set whose class is known by exploring an inherent relationship between preprocessed data, or clustering, which groups data based on similarity without class information. In this case, various other mining methods may exist, and mining may be performed differently depending on a type of big data to be collected and stored or a type of query to be requested later. The big data constructed in this way may be verified through artificial neural network deep learning or machine learning. In this case, the artificial neural network deep learning may be useful when analyzing image data.

In this case, the artificial neural network may use a Convolutional Neural Network (CNN) structure, which is a network structure using a convolutional layer. The CNN structure is suitable for image processing because images can be classified based on features within the image when image data is input. In addition, text mining is a technology for extracting and processing useful information from unstructured/semi-structured text data based on natural language processing technology. Through this text mining technology, meaningful information can be extracted from a large collection of texts, a linkage with other information can be identified, a category of text can be found. In other words, the text mining technology can be sued to obtain results beyond simple information search. Based on this, in the customized video production service according to an embodiment of the present invention, a large amount of language resources and statistical and regular algorithms may be used to analyze an identifier or natural language input as a query and to discover hidden information therein. In addition, the cluster analysis may be used to discover a group of similar characteristics by merging objects with similar characteristics. That is, when a new text, image, and background music, which are new queries, are collected after identifying the characteristics of cluster, new objects can be classified.

The upload unit 320 may receive voice data corresponding to the user's utterance uploaded from the user terminal 100. In addition, the upload unit 320 may receive any one or a combination of at least one of voice data, text data, image data, and video data from the user terminal 100 manually or automatically. That is, it includes when the user terminal 100 not only manually designate and upload a file, but also automatically upload the file. In addition, it includes not only voice data, but also text data, image data, or video data that can be uploaded. In the case of uploading voice data in the configuration above, the user may manually designate and upload the voice data, and further, the upload unit 320 may selectively receive voice data in a background mode by distinguishing a voice corresponding to the user's utterance among the recorded data recorded in the user terminal 100. For this, the user terminal 100 may receive and upload the user's utterance as a voice. In this case, various sounds may be recorded in the user terminal 100. In the case of a user who has a lot of clients visiting him or her, there may be a transcript of the client's voice or meeting with the client. In the case of a reporter, there may be a recording file in which a voice of interviewee is recorded. The upload unit 320 identifies the user's utterance for the customized video and separates the speaker to upload, by using a neural network.

A voice recognition process using a neural network may be performed to classify new input data, by changing a weight connecting neurons from an input layer to a middle layer or from the middle layer to an output layer through the learning process of the neural network, thereby minimizing errors. In addition, after learning the neural network for a certain period of time until errors are almost eliminated, when a new speaker's voice different from the learning data of the neural network is input to the neural network, the voice uttered by the new speaker can be determined and recognized. If the user needs another person's utterance instead of the user's utterance, after uploading all the voice data, only the necessary person's voice can be extracted by tagging for identification. In this case, since the classification of content of the voice is performed by the search unit 360, the classification is different from the speaker separation or identification described above.

For the speaker identification and separation described above, the upload unit 320 first passes a sample value of each separated frame through a hamming window. Thereafter, a voiced section and an unvoiced section are classified. First, for the unvoiced section, LPC (Linear Predictive Coefficient) cepstrum coefficient and FFT (Fast Fourier Transform) power spectrum are obtained by linear predictive analysis. Then, for the voiced section, the FFT cepstrum coefficient and FFT power spectrum including a DC component of low frequency part are obtained. Thereafter, for each voiced section and unvoiced section, each speaker is classified by inputting the feature data for speaker recognition in each frame through a cepstral normalization process by the cepstral mean subtraction, to the input layer of the neural network. In this subtraction method, it is assumed that an average of the cepstrum of the undistorted voice is 0 (Zero), and an average of the cepstrum of the voice of the entire section is obtained. After that, the subtracted cepstrum can be used for learning and recognition. In this case, in addition to the method described above, various methods for identifying and separating a speaker may exist, and it will be apparent that the method for identifying and separating a speaker is not limited to the method described above.

The conversion unit 330 may convert the uploaded voice data into text data using Speech to Text (STT) and store the converted data. This is an operation of converting the content into text so that the content can be identified or the search unit 360, which will be described later, can perform a search by a search word. Important keywords must be extracted from within the text and tagged, so that when a search word is entered as a query, the content can be detected based on a degree of similarity. For this, the conversion unit 330 may not only convert and store the text, but also extract keywords that is likely to appear as a search word. A keyword is a word that can represent a document by distinguishing it from other documents and can be used for information retrieval, document classification, and summary or abstract. For this function, keywords may be extracted using Term Frequency-Inverse Document Frequency (TF-IDF). Alternatively, FastText may be used, which calculates word embeddings by reflecting context of the word, which is placed before and after the word. In this case, it is possible to obtain a word having a high similarity to the category word. Alternatively, it is possible to generate a dictionary composed of keywords that assists classification by giving a weight to context by using a weight of Convolutional Neural Network (CNN) and reflecting category information.

The convolutional layer in the CNN calculates a weight for features of input sentence. Then, only the features with the highest weights in each filter are selected and classified into categories through Max-Pooling. The model updates the weights by transferring a difference between a predicted category and an actual category to each layer through back-propagation. In this process, the convolutional layer learns to give a high weight to an important feature in classifying a category in each sentence. In this case, by using a characteristic that the weight of the convolutional layer indicates an importance of the feature for classification, a word with a high weight can be regarded as a keyword and extracted. In this case, in order to flexibly cope with errors in documents such as utterance errors such as when a text is extracted to be misspelled or a wrong word is uttered, the CNN is trained syllable by syllable to obtain a weight of each syllable in the document, and then, a final importance can be obtained by combining the weights of the syllables constituting the word.

When any one category among at least one category is selected from the user terminal 100, the provision unit 340 may provide an image or a video previously mapped and stored to the selected category, to the user terminal 100. In this case, as described above, the categories and images are initially mapped through big data classification through human intervention in an initial stage and thereafter through unsupervised learning. Similarly, since not only images but also videos, texts, or characters are classified, when any one category is selected by the user terminal 100, a corresponding character, image, text, or video may be output. For example, in the case of using an ontology based image tagging technique, which uses a correlation between images, low dimensional features of an image are selected by a lower end, these features are semantically mapped to keywords at a middle end, and these keywords are linked to schema and ontology at an upper end. Furthermore, in order to acquire the semantic meaning of the image, the image is decomposed by the content, and a resulting classification of the image is structurally located at the root of the definition structure. A sequence of keywords is used to tag images, and learning examples created in the low dimensional feature extraction stage are used as an input.

In order to completely rule out human intervention, an automatic image tagging technique may be used, which uses an image segmentation algorithm. In this case, the entire features are used for image tagging. This modeling framework may be based on a non-parametric density determination method called Kernel Smoothing. In this case, a training data set of images is used for automatic tagging, and a vocabulary is used to describe the image. With images belonging to the training data set, specific images can be predicted in tag creation. Accordingly, in the case of an abstract word "love", there are learning between the image and the tagging word by human intervention in an initial stage, and additional learning and training are performed by giving an error as feedback. In this case, although music, an image, or a video representing "love" is input, it can be classified by the method described above, and accordingly, automatic tagging and classification can be performed for newly uploaded data without any further human intervention on the system. In addition, the user can also use new content in a classified and sorted state.

The creation unit 350 creates a customized video including content, an uploaded voice, a subtitle or background music when receiving subtitle data or a selection of background music by a selection of the subtitle or background music from the user terminal 100. In this case, in the case where the operation is directly performed without through the cloud, the creation unit 350 may operate directly by using the voice, text, image, and others input from the user terminal 100. Accordingly, the user terminal 100 selects any one category among at least one type of category to select content including an image or video and selects a subtitle or background music, to play a customized video including the content, the uploaded voice, the subtitle, or the background music. A video collage method or a template method may be used to render the video. The former is a method of creating a video by tying input contents together by selecting photos or videos at once and selecting a desired atmosphere. The latter is a method of selecting a pre-designed template and substituting and inserting the desired media. In this case, once a high quality template is created in advance, it can be reused multiple times by replacing a photo or video.

Furthermore, in one embodiment of the present invention, in order to produce a customized video, a configuration may be used in which resources such as various meta information, photos, and videos are input, are selected according to a strategy meta information, and are finally output as a video. The difference from the previous two methods is that this configuration uses meta information to classify and recommend limited templates so that content that meets the user's intention can be produced. In this case, it is assumed that the meta information has a standardized format or an ordinary text format having no fixed format.

For the rendering described above, an MLT (Media Lovin' Toolkit) multimedia framework may be used. The MLT supports to create an actual video by arranging various media sources in a time sequence and adding a transition effect, a filter effect, and 2D and 3D graphic effect. The MLT is an open source multimedia project that is being developed for creation of various video contents including broadcasting contents. API for interworking with external programs is provided so that the API can be accessed in various programming languages and can be used in various applications such as broadcast content, a video editor, a media player, a transcoder, and video streaming. In terms of functions, the MLT provides essential functions for easily combining and displaying multimedia contents and can continuously expand in functions by introducing a plug in structure. In this case, if a rendering function is provided, various toolkits or programs can be used other than the brands described above, and any method can be used as long as the configuration described above is satisfied.

The following is as an example using the strategy meta information described above. It is assumed that a user is a seller who sells air purifying plants and creates a promotional video for selling air purifying plants. In this case, for the video mashup, it is assumed that user information, user intention information, and strategy meta information described as meta information in a text format are secured in advance in the system. The strategic meta information may be collected in various routes and methods. In the case of a promotional video mashup, the strategic meta information may be summarized as business type information, marketing strategy, location information, atmosphere information, user intention information, and promotion time information. For example, strategic meta information such as "seedling sales" for the industry, "distributing promotional materials preferred by women in their 30s at noon" for the marketing strategy, and "to advertise mainly on air purifying plants" as user intention information may be presented. After that, keywords that are mainly nouns defined in a dictionary, are extracted from texts representing meta information, and they are used to calculate a similarity for scene combination by using a subject modeling method. It is assumed that a storyboard, which is regarding how a promotional image will develop, is selected to have a desired atmosphere or theme in advance through the user interface in the user terminal 100. For expression of this storyboard, when it is assumed that a plurality of scenes form the storyboard, a scene number, a scene sketch, a regular tag (or structured tag), and an irregular tag (or unstructured tag) according to the scene, are described in JSON (JavaScript Object Notation) format to create a high level story structure. In addition, a process of selecting a scene template, a resource, background music, a filter effect, and a mask effect proceeds to output the final video.

For this process, a meta information based connection interface between the storyboard and scene elements should be defined, and an algorithm capable of interconnecting them should be set in advance. When one storyboard is composed of a plurality of scenes, and a plurality of scene elements such as a scene template, a resource, and various effects are prepared for each scene, each of the storyboard scenes and scene elements constituting the storyboard includes regular meta tags (or regular tags; structured tags) and irregular meta tags (or irregular tags; unstructured tags), respectively. In this case, the regular meta tags are a subset of the entire meta tag set, which are defined in advance to link the storyboard and scene elements and are used to extract scene elements according to the plot or story structure. The irregular meta tags are a set of words that are not defined in a dictionary and are included in a dynamically updated dictionary. The similarity between the scene and scene elements in the storyboard may be calculated using a topic modeling method based on the irregular meta tags. The similarity may use a cosine similarity or a Euclidean distance using LSA (Latent Sematic Analysis/Indexing).

The LSA provides a function to classify and recommend by topics by expressing input documents in vector space, performing SVD (Singular Value Decomposition) to find topics, reducing a dimension of expressing documents in vector space and through this, or analyzing similarity. In order to recommend a scene template according to various strategy meta information in a state where topic modeling is completed, similarity analysis is required. In order to calculate the similarity between two vectors, a cosine similarity formula may be used but is not limited thereto. If cosine similarity is used, if the similarity is 1, it means that they are completely different, if the similarity is 0, it means that there is no correlation.

When a storyboard is given according to the association method, an abstract storyboard may be converted into a concrete project file for video synthesis by selecting scene elements suitable for each scene of the storyboard. For example, if the regular meta tag of the storyboard is described as "intro", when a regular meta tag including "intro" is detected in entirety or a part while checking regular meta tags of the scene element, this may be extracted as a candidate scene element. The most approximate scene element can be selected by performing similarity calculation according to the topic modeling method on the extracted candidate scene elements. For example, when a subset is selected through a search for regular meta tags from a pre-prepared entire set of specific scene elements, and finally, a subset of the final scene element on which a similarity calculation is completed through the irregular meta tags, is extracted, the LSA described above may be used. That is because the regular meta tags can be simply extracted through a simple word search, but the irregular meta tags need to comprehensively reflect weights of various words. In order to determine a specific scene included in the storyboard, a regular meta tags and irregular meta tags are designated for the scene template among the scene elements, and resources, background music, filter effects, and mask effects to be included in the scene are also designated in the same way. Among the scene elements, background music, filter effects, and mask effects can be configured to be reflected for the entire duration of the video for consistency of the video atmosphere.

When a voice based search word is input when searching for a voice uploaded from the user terminal 100, the search unit 360 may output a text corresponding to the voice using the STT, and then outputs a search result based on a similarity between the output text and a text included in the pre-stored voice. In addition, when a text based search word is input, the search unit 360 may output the search result based on a similarity between the input text based search word and text included in a pre-stored voice. The search unit 360 provides a list of the search results in an order of the highest degree of similarity, and the search result may be output with a time and location at which the voice was recorded along with the file in which the voice was recorded.

When the user terminal 100 selects the uploaded voice and then the background music, the adjustment unit 370 may increase or decrease a volume level of the background music in inverse proportion to a volume level of the uploaded voice. In this case, the adjustment unit 370 outputs a frequency and an amplitude of the sound as an image using a spectrogram and analyzes the output image with the CNN to understand the increase or decrease of the sound and decrease or increase the sound of the background music. For example, when the user's voice is recorded in a low level, the volume level of the voice may be adjusted to increase, or the background music may be adjusted to decrease, and vice versa. In this case, even after the process described above, adjusting the volume level of the sound of the entire customized video may be further performed for uniformity of sound output.

When a request for a purchase and payment of the customized video created by the generation unit is output from the user terminal 100, the payment unit 380 may transcode the customized video into a format operable in the user terminal 100 to be transmitted to the user terminal 100 or may transcode the customized video into a preset format of at least one website designated by the user terminal 100 and upload it after payment is completed. In this case, transcoding is a technology for converting an original video into a format suitable for the user terminal 100 although a user such as a learner does not install various programs or Active X. In transcoding, networking resources and computing resources are drastically changed according to compression rates or compression methods. In this case, sufficient networking resources or computing resources are not supplied in a single server base. In this case, since GPU can process more data per unit area than CPU, the present invention uses such characteristic that enables QoS to be adaptively maintained. First, in the dual transcoding method, before processing a transcoding request, the payment unit 380 may predict a workload to determine whether QoS can be maintained for the request. In this case, a linear regression analysis method may be used to predict the workload for the transcoding request but is not limited thereto. If it is determined that QoS can be maintained, a more suitable type of device among CPU or GPU transcoders is allocated with tasks, thereby increasing efficiency of computational resources. As a result, a single server can serve more user requests while maintaining the QoS.

The customized video production service providing server 300 may be a cloud server based on any one or a combination of Saas (Software as a Service), Iaas (Infrastructure as a Service), and Paas (Platform as a Service). The Iaas (Infrastructure as a Service) may provide various infrastructure resources such as server resources, IP, network, storage, and power required for server operation flexibly and quickly. The Iaas may easily add or remove resources and provide an operating system to provide a friendly environment for a user. The Paas (Platform as a Service) may provide various services and also provide a stable environment and an API for developing applications that use the environment. The Paas may easily build and distribute source code and is easy to adjust according to usage. The SaaS (Software as a Service) is a service that provides the user with applications running in the cloud environment. The Saas can be easily accessed from anywhere on the Internet and can be accessed from anywhere with a web browser.

In the case of an environment that does not use the cloud in which the user terminal 100 directly record a voice and immediately produce a customized video with the recorded voice data, the cloud mentioned above may not be used, and the system may be embodied and configured without configuration of the cloud platform. In addition, for example, when there are a plurality of user terminals 100, there may be an embodiment in which the user terminal 100 that does not have a built-in microphone performs producing a custom video and uploads it to the cloud, and the user terminal 100 that has a built-in microphone performs recording and uploads it to the cloud. In this case, the embodiment may be embodied in such a way that at least one component and a step may be embodied to be separated into a plurality of user terminals 100, or conversely, a plurality of components and steps may be integrated in one user terminal 100.

Hereinafter, an operation process according to the configuration of the customized video production service providing server of FIG. 2 will be described in detail with reference to FIGs. 3 and 4 as an example. However, it will be apparent that the embodiment is only one of various embodiments of the present invention and is not limited thereto.

Referring to FIG. 3, in a section (a), the customized video production service providing server 300 receives background music, characters, categories, content, and the like from at least one content providing terminal 400, classifies them by category, and builds big data. Then, in a section (b), when the user terminal 100 selects a category for creating a customized video, the customized video production service providing server 300 provides the pre-mapped and stored background music, characters, and content corresponding to the selected category. In this case, the categories may include love, sadness/comfort, friendship, encouragement, farewell, holiday greetings, filial piety, anniversary, joy/ celebration, promotion, condolence, opening greetings, Buddha's birthday, Christmas, reviews, reminders/notices, seasons, nature, birthday celebrations, travel, and others but are not limited to those listed above.

In this case, when the category of "love" is selected in the user terminal 100, images, background music, video, text, character, and others related to "love" may be output. After the user selects a character, selecting a subtitle and background music or recording a voice are performed, each selection operation may be performed randomly or sequentially. Accordingly, referring to a section (c), on the screen of the user terminal 100, content mapped with the tag or metadata of "love" such as A to F is output. After the user selects A, referring to a section (d), when the user selects background music, background music mapped with "love" may be listed. In this case, since the user may want to use various background music other than the background music in the corresponding category, other background music outside the category may be searched for and input through a search function. The whole categories of background music may be classified not only by music genre, but also by words such as adjectives and abstract words. For example, the categories of background music may include humor, horror, bizarre, sad, touching, peace, hope, violent, innocence, calmness, solemnity, sincerity, beat, joy, sadness, serious, lively, grandiose, painful, dreamy, leisurely, sorrowful, excited, lonely, childish, melancholy, frustration, mystery, urgency, stillness, excitation, daily life, classic, lively, club, tension, determined, wretchedness, nervousness, nice, cuteness, sweetheart, happiness, self-composed song, dignified, cheerful, reminiscent, and warm. In this case, recommended music for each category or a one minute preview may be provided. When background music is selected, the corresponding background music is inserted in the customized video.

When the background music is selected in the user terminal 100, the next step, or a random step, is to retrieve the file recorded in the user terminal 100, that is, search for voice data. can be inserted, as shown (a) of FIG. 4. Referring to a section (b) of FIG. 4, the voice data can also be searched by a voice and can be searched as shown in a section (c) of FIG. 4. In addition, if the user like the rendering result combination of the inserted voice data, background music, content, and others, the user terminal 100 may perform a payment for storage or upload.

Since the details that have not been described with respect to the method for providing a customized video production service using the cloud-based voice combination of FIGs. 2 to 4 can be easily inferred from the described content in the method for providing a customized video production service using the cloud-based voice combination through FIG. 1, the detailed description will be omitted.

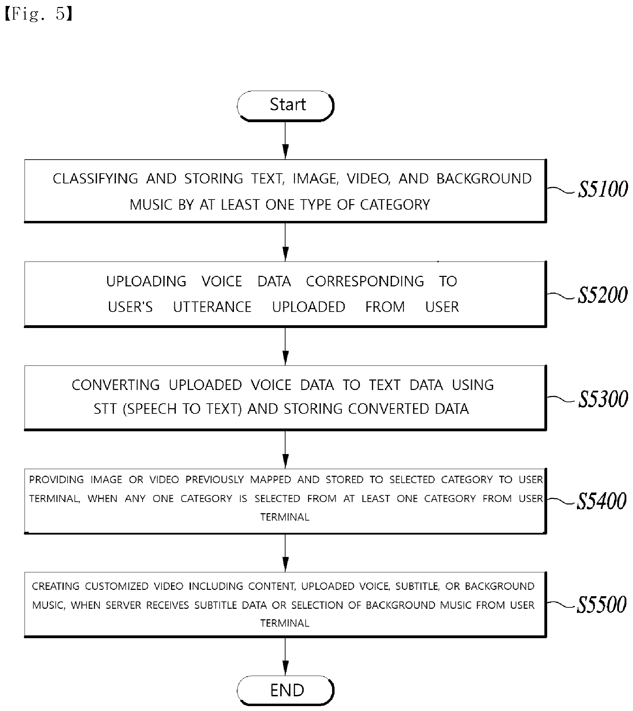

FIG.5 is an operation flowchart illustrating a method of providing a customized video producing service using a cloud-based voice combination according to an embodiment of the present invention. Hereinafter, an example of a process in which data is transmitted and received between each component will be described with reference to FIG. 5, but the present application is not limited to such an embodiment. It is apparent to those skilled in the art that the data transmission and reception process shown in FIG. 5 may be changed according to the various embodiments described above.

Referring to FIG. 5, the customized video production service providing server classifies and stores a text, an image, a video, and background music by at least one type of category S5100 and receive a voice data corresponding to the user's utterance uploaded from the user terminal. S5200.

In addition, the customized video production service providing server converts the uploaded voice data to text data using STT (Speech to Text) and stores it S5300, and when any one category is selected from at least one category from the user terminal, the customized video production service providing server provides an image or video previously mapped to the selected category to the user terminal S5400.

Finally, when the customized video production service providing server receives subtitle data or a selection of background music by a selection of the subtitle data or background music from the user terminal, the customized video production service providing server creates a customized video including the content, the uploaded voice, the subtitle, or background music S5500.

The order of steps S5100 to S5500 described above is merely an example and is not limited thereto. That is, the order of steps S5100 to S5500 may be mutually changed, and some of these steps may be simultaneously executed or deleted.

What has not been described with respect to the method of providing a customized video production service using the cloud-based voice combination of FIG. 5 as described above can be easily inferred from the content described with respect to the method of providing a customized video production service using the cloud-based voice combination through FIGs. 1 to 4, the detailed description will be omitted.

The method for providing a customized video production service using the cloud-based voice combination according to an embodiment described with reference to FIG. 5 may be embodied in a form of a recording medium including commands executable by a computer, such as an application or a program module executed by a computer. Computer-readable media can be any available media that can be accessed by a computer and includes volatile media, nonvolatile media, separable media, and non-separable media. In addition, computer-readable media may include all computer storage media. The computer storage media includes volatile media, nonvolatile media, separable media, and non-separable media embodied by any method or technology for storing information such as computer readable commands, data structures, program modules, or other data.

The method for providing a customized video production service using cloud-based voice combination according to an embodiment of the present invention described above may be executed by an application basically installed in a terminal or may be executed by an application installed directly on the master terminal by a user through an application providing server such as an application store server, an application, or a web server related to the corresponding service. In this sense, the method for providing a customized video production service using cloud-based voice combination according to an embodiment of the present invention described above may be embodied as an application installed in a terminal by default or directly installed by a user and may be recorded on a computer-readable recording medium such as a terminal. Meanwhile, the application may include a program included in a platform or an operating system basically installed in the terminal.

The description of the present invention described above is for illustration, and those of ordinary skill in the art to which the present invention pertains can understand that it can be easily modified into other specific forms without changing the technical spirit or essential features of the present invention. Therefore, it should be understood that the embodiments described above are illustrative in all respects and not restrictive. For example, each component described as a single type may be embodied in a separated form, and likewise, components described as in a separated form may be embodied in a combined form.

The scope of the present invention is indicated by the appended claims rather than the description above, and all changes or modifications derived from the meaning and scope of the claims and their equivalents should be construed as being included in the scope of the present invention.

### INDUSTRIAL APPLICABILITY

According to the present invention, a method for providing a customized video producing service using a cloud-based voice combination enables even ordinary people to create a customized video by intuitively matching a subtitle, background music, and a recorded file without purchasing or downloading an editing program, by automatically distinguishing and extracting the recorded file containing a user's utterance among recorded files stored in a user terminal to upload the recorded file to a cloud platform in a background mode and providing content by at least one prestored category when a user produces a customized video in the user terminal, and can maximize user convenience by automatically transcoding the customized video to fit into a format required by a preset upload server when uploading it to the upload server.

## Claims

1. A system for providing customized video producing service using a cloud-based voice combination, the system comprising a customized video production service providing server including:
a user terminal that is input and uploads utterance of a user as voice data, selects any one category among at least one type of category to select content including an image or a video, selects a subtitle or background music, and plays a customized video including the content, the uploaded voice data, and the subtitle or background music;
a database unit classifying and storing text, image, video, and background music by the at least one type of category;
an upload unit receiving the voice data corresponding to the utterance of the user uploaded from the user terminal;
a conversion unit that converts the uploaded voice data into text data using STT (Speech to Text) and stores the converted text data;
a provision unit that provides an image or video previously mapped and stored to the selected category to the user terminal when any one category among the at least one type of category is selected from the user terminal;
a creation unit that creates the customized video including the content, the uploaded voice, and the subtitle or background music when receiving subtitle data or selection of background music from the user terminal by a selection of the subtitle or background music from the user terminal.

2. The system of claim 1, wherein the upload unit receives any one or a combination of at least one of voice data, text data, image data, and video data from the user terminal manually or automatically.

3. The system of claim 1, wherein the upload unit distinguishes the voice data corresponding to the utterance of the user from among recorded data recorded in the user terminal and selectively receives the voice data as a background mode.

4. The system of claim 1, wherein the customized video production service providing server is a cloud server based on any one or a combination of at least one of Software as a Service (Saas), Infrastructure as a Service (Iaas), Software as a Service (Saas), and Platform as a Service (Paas).

5. The system of claim 1, wherein the customized video production service providing server further includes a search unit, wherein when a voice based search word is input to search for the uploaded voice data in the user terminal, the search unit outputs a text corresponding to the voice based search word using the STT and outputs a search result based on a similarity between the output text and a text included in a prestored voice data,
wherein when a text based search word is input, the search unit outputs a search result based on a similarity between the input text based search word and the text included in the prestored voice data.

6. The system of claim 5, wherein the search unit provides the search result by listing the search result in an order of a highest similarity, and the search result is output with a file in which the voice data was recorded along with a time and a location at which the voice data was recorded.

7. The system of claim 1, wherein the customized video production service providing server further includes an adjustment unit increasing and decreasing a volume level of the background music in inverse proportion to a level of the uploaded voice data, when the user terminal selects the uploaded voice data and the background music.

8. The system of claim 1, wherein the customized video production service providing server further includes a payment unit, wherein when a purchase and payment request for the customized video created by the creation unit is output from the user terminal, the payment unit transcodes the customized video into a format operable in the user terminal and transmits the transcoded customized video to the user terminal, or transcodes the customized video into a preset format of at least one website designated by the user terminal and uploads the transcoded customized video, after payment is completed.
